# FASCICULE DE BREVET EUROPEEN

(11) **EP 2 646 916 B1**
(45) Date de publication et mention de la délivrance du brevet: **24.09.2014**
(21) Numéro de dépôt: 11787891.8
(22) Date de dépôt: 24.11.2011
(51) Int. Cl.: G06F 11/14, G06F 12/14, G06F 11/10

(54) **PROCÉDÉ ET DISPOSITIF DE FIABILISATION D'UN SYSTÈME MULTI-PROCESSEUR PAR POINTAGE HYBRIDE**
VERFAHREN UND VORRICHTUNG FÜR DIE ZUVERLÄSSIGKEIT VON MULTIPROZESSORSYSTEMEN DURCH GEMISCHTES CHECKPOINTING
METHOD AND APPARATUS FOR THE RELIABILITY OF A MULTIPROCESSOR SYSTEM THROUGH HYBRID CHECKPOINTING

(30) Priorité: 01.12.2010 FR 1059989
(43) Date de publication de la demande: 09.10.2013
(73) Titulaire: Commissariat à l'Énergie Atomique et aux Énergies Alternatives, 75015 Paris (FR)
(72) Inventeur: CARTRON, Mickaël, F-92320 Chatillon (FR); CONGAL, Yoann, F-91190 Gif-sur-yvette (FR)
(74) Mandataire: Hammes, Pierre
(86) Numéro de dépôt international: PCT/EP2011/070978
(87) Numéro de publication internationale: WO 2012/072500

(56) Documents cités:
- US-A- 5 923 832
- US-A1- 2006 101 033
- US-A1- 2009 182 782
- US-B1- 6 658 589

## Description

La présente invention concerne un procédé et un dispositif de fiabilisation d'un système multi-processeur par pointage hybride. Elle s'applique notamment dans le domaine des systèmes multi-processeurs embarqués.

La problématique générale est la fiabilisation des systèmes multiprocesseurs, dans la logique desquels des fautes transitoires peuvent se produire et conduire à des défaillances. Par exemple, il peut s'agir d'une faute dans la logique de l'un des processeurs. Ces fautes transitoires peuvent être dues à des perturbations temporaires comme des chutes des particules de type neutrons ou protons, à des rayonnements comme des rayonnements gamma ou encore à du bruit inductif sur l'alimentation. En effet, les technologies actuelles des multiprocesseurs sont de plus en plus sensibles à de telles perturbations, du fait du niveau d'intégration toujours plus élevé en termes de densité surfacique de transistors et de nombre total de transistors. Pour autoriser des applications critiques avec un haut niveau de fiabilité, il est souhaitable de se prémunir contre ces fautes transitoires, qui peuvent se propager dans la mémoire.

Dans une tentative pour résoudre les problèmes liés aux fautes transitoires, des techniques basées sur des codes correcteurs d'erreurs dans la mémoire, connues sous la terminologie anglo-saxonne ECC signifiant Error Correcting Codes, ont été développées. Ces techniques sont flexibles, car la puissance de correction du code peut être adaptée aux conditions de l'environnement visé ainsi qu'au niveau de fiabilité attendu. De plus elles sont faciles à implémenter étant donné que l'encodeur/décodeur est mutualisé pour tous les emplacements mémoires, ce qui permet de générer un faible surcoût en surface pour le contrôle. Un inconvénient majeur de ces techniques est qu'elles ne sont utilisables que du fait de la régularité de structure typique des mémoires. Malheureusement les erreurs se produisant dans la logique des processeurs (par opposition aux mémoires) n'offrent pas une telle régularité.

D'autres approches ont été explorées pour tenter de fiabiliser la logique des systèmes multiprocesseurs, notamment les approches basées sur la duplication spatiale, les approches basées sur le multi-échantillonnage ou encore les approches orientées pointage, qui sont plus connues sous la terminologie anglo-saxonne de *checkpointing.*

Les approches basées sur la duplication spatiale existent en plusieurs variantes, mais l'idée commune est de faire le calcul désiré simultanément sur plusieurs circuits logiques identiques et de réagir en cas de l'observation d'une différence sur les sorties. Une variante consiste à avoir deux instances du circuit à protéger, associées à un mécanisme de détection sur au moins l'une des instances pour déterminer laquelle des deux instances a été victime de l'erreur. Cette variante de la duplication spatiale a cependant plusieurs inconvénients. Tout d'abord la logique doit être dupliquée et dès qu'une erreur transitoire a eu lieu, les deux instances ont alors divergé, ce qui oblige à ajouter un système de resynchronisation des deux instances. De plus, la détection d'erreur est sur le chemin critique du flot de données, ce qui est préjudiciable pour les performances et oblige à choisir un détecteur très rapide, au détriment de sa complexité et de sa couverture d'erreurs.

Une autre variante consiste à avoir trois instances en parallèle et un vote majoritaire en sortie. Cette méthode évite de placer un détecteur dans l'une des instances comme la méthode à deux instances exposée précédemment, mais elle fait apparaître un système de vote majoritaire sur le chemin critique du flot de données, ce qui est là encore préjudiciable pour les performances. De plus, la multiplication par trois de la logique est très coûteuse en surface.

Les approches basées sur le multi-échantillonnage consistent à remplacer l'ensemble des bascules d'un circuit par des bascules spéciales permettant d'échantillonner plusieurs fois le signal. Statistiquement, en cas de perturbation temporaire et si le système est bien dimensionné, c'est-à-dire si sa fréquence de fonctionnement n'est pas trop élevée, les conditions peuvent être réunies pour qu'il y ait peu de chance qu'une erreur affecte tous les échantillons. Il existe essentiellement deux variantes de multi-échantillonnage : le pré-échantillonnage et le post-échantillonnage. Dans tous les cas, ces méthodes sont coûteuses en surface et la tolérance aux fautes est partielle et difficile à réaliser.

En effet, un inconvénient majeur du pré-échantillonnage est qu'il limite la fréquence de fonctionnement du système et donc ses performances. Mais en cas de divergence, le deuxième échantillon a statistiquement plus de chance d'être correct, car beaucoup de fautes transitoires se traduisent en une latence accrue. Le pré-échantillonnage est donc une méthode de détection de fautes et de tolérance probable des fautes.

Alors que dans le cas du post-échantillonnage, la faute peut seulement être détectée, pas tolérée. C'est un de ses inconvénients majeurs.

Enfin, les approches orientées *checkpointing* selon l'expression anglo-saxonne consistent notamment à mettre périodiquement les données du système surveillé en sécurité dans une mémoire de stockage, dans le but de les réutiliser ultérieurement en cas de besoin pour recouvrer l'état du système. Dans la suite de la présente demande, on parlera "d'approche par pointage" ou de "système de pointage" pour désigner une approche orientée *checkpointing* ou un système implémentant une telle approche. Dans la suite de la présente demande, on désignera simplement par "pointage" l'ensemble des données stockées lors d'une étape de stockage réalisée dans le cadre d'une approche par pointage. Les approches par pointage permettent de remettre le système surveillé dans un état antérieur à l'occurrence de la faute et à l'ensemble de ses conséquences. Pour réaliser un système tolérant aux fautes transitoires dans la logique, il faut en plus combiner le système de pointage avec des détecteurs de fautes ou d'erreurs. Cette approche par pointage permet alors de supposer que le système surveillé n'a pas été victime de fautes et la détection se fait en parallèle de la fonction du bloc surveillé. La détection est alors dite « hors du chemin critique », ce qui permet de maximiser les performances tant que les actions restent annulables. Si la supposition que le système surveillé a bien fonctionné se révèle juste, alors celui-ci continue simplement son exécution. Dans le cas contraire, le système surveillé interrompt son fonctionnement et son état sans la faute et l'ensemble de ses conséquences est alors restitué.

Les variantes d'approches par pointage se distinguent d'abord par l'étendue de la capacité de recouvrement. Par exemple, certains systèmes de pointage se limitent à l'étendue d'un processeur, le vocable anglo-saxon « rollback » étant alors utilisé. Dans ce cas, il est possible de défaire des actions fausses dans le processeur, mais toutes actions hors du processeur, telles que les lectures et écritures vers l'espace mémoire, ne peuvent pas être annulées. Il faut donc combiner cette approche par pointage avec des détecteurs de fautes ou d'erreurs à très faible latence, éventuellement au détriment de la couverture de détection. D'autres systèmes de pointage s'étendent sur des systèmes plus étendus que le simple processeur. Cela autorise alors une latence de détection élevée et cela permet de garder des performances élevées du fait que la détection est faite hors du chemin critique.

Les variantes d'approche par pointage se distinguent également par la politique de contrôle. Dans le cas d'un système multiprocesseurs avec plusieurs modules mémoires, chaque processeur et chaque module mémoire gère son propre contrôle indépendamment, qu'il s'agisse de la vérification ou du stockage. La politique globale de pointage peut alors varier d'un système à l'autre : elle peut être coordonnée ou non coordonnée.

Les approches coordonnées se proposent de créer des pointages globaux et coordonnés de tout le système. Les pointages sont ainsi consistants par construction et donc rapidement obsolètes, ce qui tend à diminuer le nombre de pointages stockés simultanément et donc à diminuer le volume de stockage. Cependant, lorsqu'un composant ou une application requiert un pointage, il emmène l'ensemble du système dans cette décision. Si ce comportement est acceptable dans des contextes simples, par exemple lorsqu'il y a peu de processeurs et peu d'applications disjointes, cela devient inacceptable dès lors que le système augmente en complexité, par exemple dans les cas multiprocesseurs et/ou multiapplications. Ainsi, cette approche coordonnée mène facilement à une situation où il faut gérer le "pire cas global", c'est-à-dire le cas où le coût (en mémoire et en performance) de synchronisation devient prédominant car les pointages deviennent très fréquents et où concouramment les pointages à stocker sont très volumineux car globaux.

A l'inverse, une politique de pointages non coordonnés est possible. Dans cette approche, des pointages sont effectués aux moments les plus appropriés de façon non coordonnées sur les différents composants du système surveillé. Si un recouvrement s'avère nécessaire, alors il faut déterminer un ensemble de pointages, plus précisément un pointage par composant, qui ait la propriété de consistance telle que décrite par K. Mani Chandy et Leslie Lamport dans "Distributed Snapshots: Determining Global States of Distributed Systems" (ACM Transactions on Computer Systems, Vol.3, No.1, February 1985, Pages 63-75), XP 00 234 2863. Dans un cas de figure extrême, s'il n'est pas possible de trouver un ensemble consistant de pointages, alors l'état de repli choisi est l'état initial du système par « effet domino ». Les avantages de cette approche non coordonnée sont que les pointages sont choisis de façon ciblée par composant, ce qui génère moins de surcharge de synchronisation et de pointage local. De plus, le stockage des pointages est globalement moins volumineux. Enfin, il n'y a pas d'effet « pire cas global » typique de l'approche coordonnée. En revanche, les pointages ne sont pas consistants par construction, ce qui rend l'obsolescence des pointages lente ou nulle, en tous cas difficile à déterminer. Ce qui implique que le volume de stockage est *a priori* non borné, ce qui est problématique, surtout en embarqué. L'éligibilité de cette approche est ainsi très liée au contexte applicatif, ce qui constitue encore un inconvénient majeur.

L'invention a notamment pour but, en s'appuyant sur une méthode de pointage hybride, le pointage étant coordonné au sein de groupes de processus et non coordonné entre ces groupes, d'éviter à la fois les inconvénients précités des méthodes de pointage coordonnées et à la fois les inconvénients précités des méthodes de pointage non-coordonnées. A cet effet, l'invention a notamment pour objet un procédé de fiabilisation d'un système comportant une pluralité de processeurs ainsi qu'une mémoire. Le procédé comporte une étape de regroupement des processus en une pluralité de groupes. Il comporte également une étape de sauvegarde, de façon individuelle pour chaque groupe de processus, des données stockées dans la mémoire utilisables par au moins un des processus appartenant audit groupe, de manière à restaurer un état global sans erreur du système suite à une erreur survenant dans un processeur exécutant l'un des processus appartenant audit groupe, sans avoir à restaurer la globalité de la mémoire.

Avantageusement, chaque groupe peut regrouper des processus partageant une ressource du système. Par exemple, la ressource partagée peut être la mémoire.

Dans un mode de réalisation préférentiel, chaque groupe peut être une sphère de dépendance de données pouvant regrouper des processus pouvant accéder à des zones de la mémoire telles que l'union de toutes lesdites zones est connexe logiquement, et telles que toute zone parmi lesdites zones est d'intersection non-vide avec l'union de toutes les autres zones parmi lesdites zones.

Avantageusement, le procédé comporte une étape de confinement des accès à la mémoire par sphère de dépendance de données. Cette étape de confinement peut inclure une étape de gestion de droits d'accès aux zones de la mémoire pour chaque processus, de manière à empêcher la propagation d'une erreur logique survenant dans le processeur exécutant ledit processus, ainsi qu'une étape de gestion d'indicateurs d'appartenance des zones de la mémoire à chaque sphère de dépendance de données.

L'invention a également pour objet un dispositif de fiabilisation d'un système comportant une pluralité de processeurs ainsi qu'une mémoire. Le dispositif comporte des moyens pour regrouper les processus en une pluralité de groupes. Il comporte également des moyens pour sauvegarder individuellement pour chaque groupe de processus les données stockées dans la mémoire utilisables par au moins un des processus appartenant audit groupe, de manière à restaurer un état global sans erreur du système suite à une erreur survenant dans un des processeurs exécutant l'un des processus appartenant audit groupe, sans avoir à restaurer la globalité de la mémoire.

Avantageusement, les moyens pour regrouper peuvent regrouper des processus partageant une ressource du système. Par exemple, la ressource partagée peut être la mémoire.

Dans un mode de réalisation préférentiel, les moyens pour regrouper peuvent regrouper les processus par sphères de dépendance de données, chaque sphère de dépendance de données pouvant contenir des processus pouvant accéder à des zones de la mémoire telles que l'union de toutes lesdites zones est connexe logiquement et telles que toute zone parmi lesdites zones est d'intersection non-vide avec l'union de toutes les autres zones parmi lesdites zones.

Avantageusement, le dispositif comporte des moyens pour confiner les accès à la mémoire par sphère de dépendance de données, ces moyens pour confiner pouvant inclure des moyens pour gérer des droits d'accès aux zones de la mémoire pour chaque processus, de manière à empêcher la propagation d'une erreur logique survenant dans le processeur exécutant ledit processus, ainsi que des moyens pour gérer des indicateurs d'appartenance des zones de la mémoire à chaque sphère de dépendance de données.

Dans un mode de réalisation, pour chaque sphère de dépendance de données, les données sauvegardées peuvent inclure les données stockées dans l'union connexe des zones de la mémoire pouvant être accédées par l'un des processus appartenant à ladite sphère. Elles peuvent également inclure les données stockées dans les registres des processeurs exécutant l'un des processus appartenant à ladite sphère. Elles peuvent également inclure les données stockées dans les étages de pipeline des processeurs exécutant l'un des processus appartenant à ladite sphère. Elles peuvent également inclure les données stockées dans les unités de gestion de la mémoire ou dans les unités de protection de la mémoire incluses dans les processeurs exécutant l'un des processus appartenant à ladite sphère. Elles peuvent enfin inclure les données stockées dans les mémoires caches des processeurs exécutant l'un des processus appartenant à ladite sphère.

Dans un mode de réalisation, les moyens pour regrouper les processus en sphères de dépendance de données peuvent être implémentés sous la forme de services fournis par le système d'exploitation du système, ces services pouvant fournir les différentes sphères de dépendance de données correspondant à tous les processus couramment exécutés.

Dans un mode de réalisation, les moyens pour sauvegarder peuvent inclure des moyens pour coordonner les sauvegardes des différentes sphères de dépendance de données correspondant à tous les processus couramment exécutés, ces moyens pour coordonner pouvant inclure des moyens pour déclencher une sauvegarde des données pour une sphère de dépendance de données correspondant à des processus couramment exécutés, ainsi que des moyens pour déclencher, suite à l'erreur logique survenue dans un des processeurs exécutant l'un des processus appartenant à ladite sphère, la restauration des données sauvegardées pour ladite sphère de dépendance de données exclusivement.

Dans un mode de réalisation, les moyens pour confiner peuvent inclure une unité de gestion de la mémoire ou une unité de protection de la mémoire associée à chacun des processeurs du système, ladite unité pouvant interdire au processeur auquel elle est associée l'accès à la mémoire en dehors de la zone allouée au processus en cours d'exécution par ledit processeur.

Dans un mode de réalisation, l'unité de gestion de la mémoire ou l'unité de protection de la mémoire peut inclure des moyens de gestion de droits d'accès à la mémoire, les sphères de dépendance de données courantes dépendant de ces droits d'accès.

Les objets ci-dessus sont atteints de façon avantageuse grâce aux caractéristiques définies par les revendications indépendantes 1 et 2. D'autres améliorations sont fournies par les revendications dépendantes.

La présente invention a pour principal avantage de cumuler les avantages des politiques coordonnées, comme l'obsolescence rapide et le stockage borné des pointages, avec les avantages des politiques non coordonnées, comme la surcharge de synchronisation faible, la surcharge de pointage faible et la taille de stockage des pointages optimale globalement.

Le document US-A-5 923 832 divulgue les caractéristiques qui sont définies dans le préambule des revendications indépendantes.

D'autres caractéristiques et avantages de l'invention apparaîtront à l'aide de la description qui suit faite en regard de dessins annexés qui représentent :
- la figure 1, une illustration schématique du principe de sphère de dépendance de données selon l'invention;
- la figure 2, une illustration par un diagramme d'architecture d'un exemple de réalisation d'un système selon l'invention;
- la figure 3, une illustration par un diagramme d'architecture d'un exemple de réalisation d'un contrôleur mémoire selon l'invention capable de pointage par sphère de dépendance de données;
- la figure 4, une illustration schématique d'un exemple de composant de sauvegarde selon l'invention;
- la figure 5, une illustration par une machine d'états d'un exemple de contrôleur mémoire selon l'invention;
- les figures 6, 7 et 8, une illustration par des diagrammes d'un exemple de procédure d'écriture selon l'invention;
- les figures 9 et 10, une illustration par des diagrammes d'un exemple de procédure de recouvrement selon l'invention;
- la figure 11, une illustration par un diagramme d'un exemple de procédure de suppression d'un pointage obsolescent selon l'invention;
- la figure 12, une illustration d'un exemple de procédure de création d'un pointage selon l'invention;
- la figure 13, une illustration d'un exemple de procédure de maintenance selon l'invention.

Dans un mode de réalisation basique de l'invention, des processus peuvent être regroupés de manière totalement arbitraire, c'est-à-dire bien que ces processus n'aient strictement aucun lien entre eux. Un tel regroupement arbitraire des processus conduit à un fonctionnement qui, quoique évitant les inconvénients des méthodes de pointage coordonnées et des méthodes de pointage non coordonnées de l'art antérieur, est cependant non optimal. C'est pourquoi, dans la suite de la présente demande, un mode de réalisation plus performant est décrit, dans lequel des processus partageant des zones mémoires sont regroupés en s'appuyant sur la notion de Sphère de Dépendance de Données (SDD) selon l'invention.

Mais il n'échappera pas à l'homme du métier, à la lecture de la présente demande, que la portée de la présente invention s'étend au-delà du partage de zones mémoires. Des processus partageant une ressource de communication, ou encore des processus partageant une ressource d'entrée/sortie, ou encore des processus partageant une interruption matérielle peuvent être regroupés selon l'invention.

### Sphère de dépendance des données

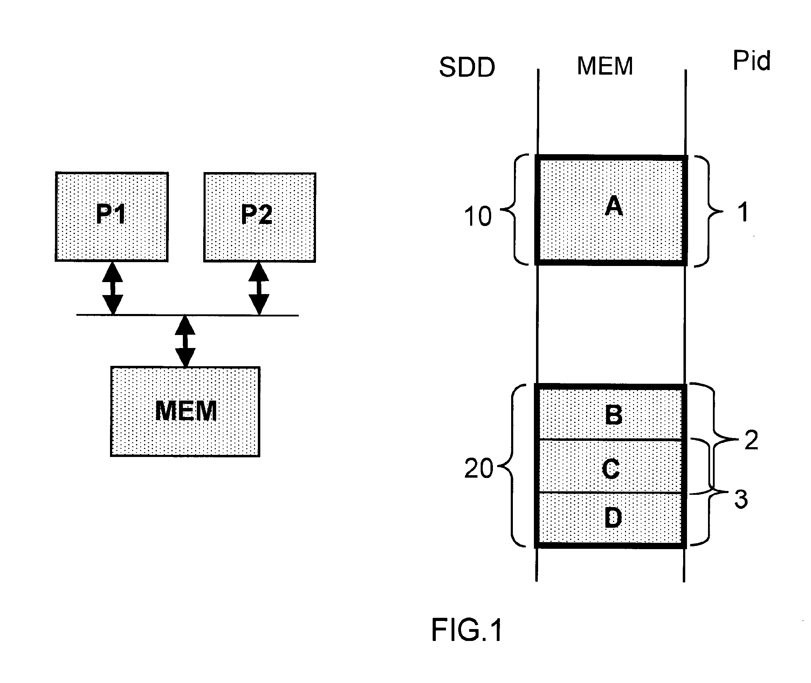

La figure 1 illustre schématiquement le principe de SDD selon l'invention. Une SDD est un regroupement de processus qui utilisent des zones mémoires communes. Ainsi, dans l'exemple de la figure 1, un système multiprocesseur comporte deux processeurs P1 et P2 partageant une mémoire principale MEM. Les composants fournissant les ressources du système, à savoir les processeurs P1, P2 et la mémoire MEM, sont reliés par un bus de données. Un processus dont le Pid ("Process identifier") vaut 1 utilise des données dans une zone mémoire A de la mémoire MEM, ces données pouvant inclure du code et des données. Un processus dont le Pid vaut 2 utilise des données dans des zones B et C de la mémoire MEM. Un processus dont le Pid vaut 3 utilise des données dans la zone C et dans une zone D de la mémoire MEM. Deux SDD disjointes 10 et 20 peuvent alors être créées selon l'invention. La SDD 10 inclut le processus de Pid=1 et a pour périmètre mémoriel la zone mémoire A. La SDD 20 regroupe le processus de Pid=2 avec le processus de Pid=3 et a pour périmètre mémoriel les zones mémoire B, C et D. Considérant le périmètre mémoriel de la SDD 20, il peut être constaté que l'union de la zone BuC pouvant être accédée par le processus 2 avec la zone CuD pouvant être accédée par le processus 3 est connexe logiquement au sens de la présente invention, puisque l'union de la représentation de la zone BuC sur la figure 1 avec la représentation de la zone CuD sur la figure 1 est d'un seul tenant sur la figure 1. Au sens de la présente invention, il s'agit de connexité logique et non pas de connexité physique. L'union de telles zones peut ne peut pas être connexe physiquement, mais dès lors que ces zones sont représentées dans un espace géométrique, l'union de leurs représentations a la propriété de connexité dans l'espace de représentation, comme illustré par la figure 1. Il peut également être constaté que l'intersection entre la zone BuC et l'union des autres zones formant le périmètre mémoriel de la SDD 20, à savoir uniquement la zone CuD, est non vide (puisque égale à C). Il peut être noté qu'un processus ne peut appartenir à plus d'une SDD et qu'une SDD peut éventuellement être constituée d'un seul processus.

Dans un mode de réalisation, la gestion des SDD, qui inclut la création, la modification et la suppression de SDD au gré des créations et des suppressions de processus sur les processeurs P1 et P2, peut être laissée à la charge du programmeur. Celui-ci doit alors avoir une excellente maîtrise des ressources utilisées par son programme, qu'il s'agisse des ressources de calcul comme P1 et P2 ou qu'il s'agisse des ressources de mémorisation comme MEM.

Avantageusement, un périmètre de confinement à chacune des SDD 10 et 20 peut être réalisé en utilisant, associé à chacun des processeurs P1 et P2, un composant comme une unité de gestion de mémoire ("Memory Management Unit" ou MMU) ou comme une unité de protection de mémoire ("Memory Protection Unit" ou MPU). Une fois correctement configurés, ces MMU ou ces MPU peuvent interdire les accès au-delà du périmètre mémoriel de la SDD du processeur auquel ils sont associés respectivement. Habituellement, les MMU et les MPU sont employés pour contrer d'éventuelles erreurs de programmation. La présente invention propose de les utiliser avantageusement pour contrer les effets des fautes transitoires dans la logique.

Dans un mode de réalisation préférentiel, la gestion des SDD peut être implémentée par des services systèmes, par exemple par les services systèmes déjà utilisés par les MMU et les MPU, de manière à ne pas compliquer la tâche du programmeur. Ces services systèmes sont appelés par exemple dans les cas suivants : lors du placement des tâches sur les ressources, lors de l'allocation mémoire, lors de la demande d'accès à une ressource, lors de la demande d'accès à une ressource de communication type IPC (Inter Process Communication).

Une fois que les périmètres de confinement sont mis en place selon l'invention, des propriétés apparaissent qui permettent d'optimiser le pointage, de sorte qu'il soit bien plus efficace que les techniques coordonnées et non coordonnées de l'art antérieur. La présente invention propose une politique de pointage hybride coordonnée au sein des SDD et non coordonnée entre les SDD. Cette politique permet d'implémenter des systèmes de pointage considérablement allégés à la fois concernant le traitement et le stockage, tout spécialement dans un contexte multiapplications et multi-processeurs.

### Architecture générale

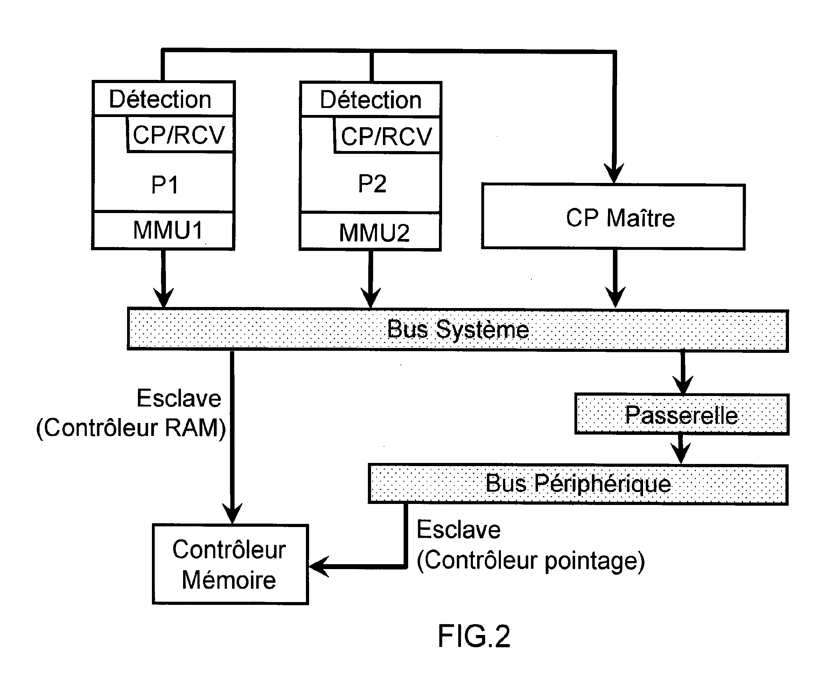

La figure 2 illustre par un diagramme d'architecture un exemple de réalisation d'un système selon l'invention comprenant les processeurs P1 et P2. Chacun des processeurs P1 et P2 inclut une MMU. Les processeurs P1 et P2 sont capables de pointage, c'est-à-dire qu'ils sont capables de sauvegarder et de recouvrer leur état interne (registres, étages de pipeline, mémoire cache, état de la MMU et autres). A cet effet, les processeurs P1 et P2 incluent également des détecteurs d'erreurs. Le système comporte au moins un Contrôleur Mémoire capable de pointage par SDD dans la mémoire MEM, c'est-à-dire qu'il est capable de recouvrer le périmètre mémoriel correspondant à une SDD, tel qu'était ce périmètre lors d'un pointage donné. La mémoire MEM n'est pas représentée sur la figure 2 par souci de clarté. Le système comporte également un composant CP Maître (CP - CheckPoint) en charge de la coordination du pointage inter-SDD. Il comporte également un bus système et un bus périphérique reliés par une passerelle jouant le rôle de système d'interconnexion.

Chacun des composants capables de pointage gère un ensemble de pointages. Par exemple, le processeur P1 peut gérer une liste d'enregistrements, chaque enregistrement représentant l'état interne du processeur P1 à un instant où le composant CP Maître a ordonné un pointage. Le processeur P2 peut gérer une liste similaire. Le Contrôleur Mémoire peut quant à lui gérer une liste d'enregistrements, chaque enregistrement représentant un périmètre de la mémoire MEM correspondant à une SDD à un instant où le composant CP Master a ordonné un pointage. Ces listes évoluent au gré des ordres du composant CP Maître.

Chacun des composants capables de pointage est également capable, lorsque le composant CP Maître le demande, de recouvrer un des pointages parmi l'ensemble de pointages qu'il gère. Par exemple, le processeur P1 peut rétablir son état interne tel qu'il était à un instant où le composant CP Maître avait ordonné un pointage, ceci grâce à l'enregistrement de cet état interne qu'il a conservé dans sa liste. Le processeur P2 peut faire de même. Le Contrôleur Mémoire peut quant à lui rétablir un périmètre de la mémoire MEM correspondant à une SDD tel qu'il était à un instant où le composant CP Maître avait ordonné un pointage, ceci grâce à l'enregistrement de ce périmètre qu'il a conservé dans sa liste.

Si une erreur a lieu dans le processeur P1 ou P2 alors que celui-ci est en train d'exécuter un processus Pₐ utilisant des ressources mémoires RMₐ, alors cette erreur peut avoir des conséquences variées. Les ressources mémoires RMₐ du processus Pₐ sont l'ensemble des plages qu'il utilise en lecture/écriture pour stocker ses instructions et ses données dans la mémoire MEM. Ces plages peuvent éventuellement être non contiguës. L'erreur peut rester latente, mais elle peut également se propager en faisant diverger peu à peu le système d'une exécution sans erreur. Si l'erreur se propage, alors elle peut éventuellement se traduire par une écriture en mémoire à une adresse qui ne fait pas partie des ressources mémoire RMₐ. Envisager qu'une erreur sur le processeur Pᵢ pendant l'exécution du processus Pₐ puisse se propager n'importe où dans la mémoire obligerait à considérer l'ensemble des applications dans leur globalité, ce qui tendrait à alourdir beaucoup le pointage.

### Confinement des erreurs

C'est pourquoi l'invention propose un système de confinement des erreurs utilisant avantageusement une MMU ou une MPU. Dans le présent exemple de réalisation de la figure 2, il s'agit des MMU1 et MMU2 incluses dans les processeurs P1 et P2 respectivement. Une MMU, de même qu'une MPU, permet notamment de gérer des droits d'accès à la mémoire par processus, ceci à l'aide de services fournis par le système d'exploitation. Jusqu'à présent, une MMU ou une MPU permettait d'éviter les erreurs de programmation commises par les développeurs des applications et de se prémunir contre les attaques malveillantes. L'invention propose de les utiliser pour lutter contre les erreurs transitoires, en interdisant certains accès à la mémoire. Ainsi, un confinement des erreurs est obtenu, qui interdit la propagation des erreurs en dehors des ressources mémoire d'un processus donné. L'invention propose également de faire correspondre la zone de confinement à une SSD telle que définie précédemment. Ainsi, les ressources mémoire d'un processus sont strictement confinées à la SSD du processeur qui exécute ledit processus.

Considérant l'exemple de la figure 1 d'allocation des zones A, B, C et D en mémoire, la MMU1 peut par exemple gérer selon l'art antérieur pour le processus dont le Pid vaut 2 la configuration individuelle de droits d'accès suivante :
A: accès interdit;
B: Read / Write;
C: Read / Write;
D: accès interdit;
Autres zones: accès interdit.

De manière similaire, la MMU2 peut gérer selon l'art antérieur pour le processus dont le Pid vaut 3 la configuration individuelle de droits d'accès suivante :
A: accès interdit;
B: accès interdit;
C: Read;
D: Read / Write;
Autres zones : accès interdit.

L'invention propose d'ajouter à ces configurations individuelles de droits d'accès par processus gérées par les MMU des configurations de pointage par SDD. Ainsi, les deux processus de Pid valant 2 et 3 ayant été rassemblés dans une même sphère de dépendance de donnée 20 afin de faire du pointage coordonné de ces deux processus, les configurations individuelles décrites ci-dessus ne sont pas remises en cause, mais elles peuvent avantageusement être consultées afin de générer pour la SDD 20 la configuration de pointage suivante :
A: Pointage Inactif;
B: Pointage Actif;
C: Pointage Actif;
D: Pointage Actif
Autres zones: Pointage Inactif.

De plus, un processus peut éventuellement n'être affecté à aucune SDD. Un tel processus n'est alors pas protégé contre les erreurs transitoires dans la logique. Malgré tout, ses droits d'accès à la mémoire doivent être restreints par une programmation adéquate des composant MPU/MMU, afin qu'une erreur ayant lieu pendant leur exécution leur interdise l'accès aux SDD confinées. Ce système de confinement des erreurs selon l'invention permet de diminuer la complexité générale du pointage.

### Coordination du pointage

De manière générale, le composant CP Maître a pour fonction de coordonner le pointage entre les composants du système capables de pointage, à savoir les processeurs P1 et P2 et le Contrôleur Mémoire. Cette fonction inclut notamment d'accepter et de traiter les requêtes de création de pointage de la part de ces composants. Cette fonction inclut également d'envoyer les ordres de création de nouveau pointage sur une SDD aux composants qui hébergent des ressources de la SDD. Cette fonction inclut aussi d'envoyer les ordres de restitution d'un pointage sur une SDD aux composants qui hébergent des ressources de la SDD. Pour assurer cette fonction complexe de coordination, le composant CP Maître comporte plusieurs interfaces.

Le composant CP Maître du présent exemple de réalisation de la figure 2 peut notamment comporter une interface de détection. Cette interface est unidirectionnelle et prend en entrée des événements produits par les détecteurs de fautes ou d'erreurs présents dans le système. Cette interface de détection peut être réalisée de diverses manières, comme en utilisant des fils d'exécution dédiés ("threads") ou encore en utilisant le bus système ou le bus périphérique. Mais d'autres modes de réalisation sont possibles.

Le composant CP Maître du présent exemple de réalisation de la figure 2 comporte également une interface de coordination. Cette interface de coordination est bidirectionnelle et a pour but de coordonner les différentes phases de pointage entre les composants du système capables de pointage, à savoir les processeurs P1 et P2 et le contrôleur de mémoire. Cette interface peut être intégrée sur le bus système ou périphérique, mais d'autres modes de réalisations sont possibles.

Les différents messages échangés sur l'interface de coordination du présent exemple de réalisation de la figure 2 sont listés par le tableau 1 qui suit, dans lequel le composant capable de pointage désigne soit le processeur P1, soit le processeur P2, soit le Contrôleur Mémoire :

**Tableau 1**

| Source | Destination | Message |
|---|---|---|
| Composant capable de pointage | CP Maître | Requête de nouveau pointage |
| CP Maître | Composant capable de pointage | Ordre de création de pointage sur SDDᵢ |
| CP Maître | Composant capable de pointage | Ordre de recouvrement sur la SDDᵢ du pointage i |
| Composant capable de pointage | CP Maître | Information d'opération de recouvrement effectuée |
| CP Maître | Composant capable de pointage | Ordre de redémarrage de la SDDᵢ |
| CP Maître | Composant capable de pointage | Ordre de suppression de pointage j de la SDDᵢ |
| CP Maître | Composant capable de pointage | Ordre de suppression de tous les pointages inférieurs à Val_plancher pour la SDDᵣ |

Ainsi, dans le présent exemple de réalisation de la figure 2, le composant CP Maître peut accepter et traiter une requête de création d'un nouveau pointage provenant d'une ressource R grâce à la séquence suivante :
o Réception du message « Requête de nouveau pointage » envoyé par la ressource R;
o Détermination de la SDD à laquelle appartient la ressource R, notée SDDr;
o Envoyer un message « ordre de création de pointage sur SDDr » à chaque composant ayant des ressources de SDDr, c'est-à-dire ayant au moins une ressource utilisée par un des processus constituant SDDr.

Si une erreur est détectée, elle est signalée sur l'interface dédiée du composant CP Maître. Lorsqu'une détection survient dans le présent exemple de réalisation de la figure 2, la séquence suivante peut être réalisée :
o Détermination de la SDD ou des SDD potentiellement affectée(s) par cette erreur, ce qui nécessite la connaissance de l'organisation de la mémoire en périmètres de SDD;
o Pour chaque SDDᵢ identifiée :
   o Détermination du pointage à restituer en fonction de l'erreur;
   o Envoi du message « ordre de restitution sur la SDDᵢ du pointage j » aux composants de la SDDᵢ;
   o Attente de la réception des messages « Restitution SDDᵢ pointage j effectuée » envoyés par les composants;
   o Envoyer message « Ordre de relance de la » aux composants appartenant à cette SDDᵢ.

En fonction des caractéristiques des méthodes de détections et de la fréquence de création de nouveaux pointages, certains pointages anciens peuvent être effacés sans risque, car il peut exister des pointages plus récents et tout aussi fiables. Ainsi, dans le but de récupérer de la place de stockage pour de futurs pointages, le composant CP Maître du présent exemple de réalisation de la figure 2 peut déterminer l'obsolescence des pointages et demander leur suppression par les composants, grâce à la séquence suivante :
o Déterminer que le pointage j de SDDᵢ est obsolète;
o Envoyer message « Ordre de suppression de pointage j de la SDDᵢ » aux composants de la SDDᵢ.

Le codage des numéros de pointage étant réalisé sur un nombre de bits limité, si le système est amené à évoluer pendant suffisamment longtemps, il se peut que la valeur maximale de numéro de pointage soit atteinte. A partir de ce moment, les pointages ultérieurs doivent être renumérotés à partir de zéro. Mais la réutilisation des numéros inférieurs est possible uniquement si le plancher de numéros de pointage a été relevé, c'est-à-dire uniquement si il a été déclaré que les numéros de pointage inférieurs à une certaine valeur étaient obsolètes. Cette valeur plancher, notée Val_plancher dans le présent exemple de réalisation de la figure 2, est définie par le composant CP Maître. Ainsi, dans le présent exemple de réalisation de la figure 2, le composant CP Maître peut réaliser une opération d'obsolescence groupée de tous les pointages inférieurs à un numéro donné pour une SDD donnée, grâce à la séquence suivante :
o Déterminer que tous les pointages inférieurs ou égaux à pointage j de la SDDᵢ sont obsolètes;
o Envoyer un message « Ordre de suppression de tous les pointages inférieurs à Val_plancher pour la SDDᵢ » aux composants de la SDDᵢ.

Une fonction d'initiation de création de pointage peut aussi s'avérer utile pour certaines applications, l'idée étant de créer des pointages sur des SDD sans que cela soit consécutif à un message de requête de la part d'un composant. Par exemple, une application qui occupe une SDD peut définir les instants de pointage de façon périodique. Cela pourrait être pertinent si cette application n'a pas d'entrée-sortie, comme une application très indépendante, ce qui peut rendre facultatif le fait de prendre des pointages. Ainsi, dans le présent exemple de réalisation de la figure 2, le composant CP Maître peut réaliser la séquence suivante :
o Détermination de l'instant d'un pointage sur une SDDᵢ,
o Envoyer un message « ordre de création de pointage sur SDDr » pour chaque composant ayant des ressources de SDDr.

### Contrôle de la mémoire

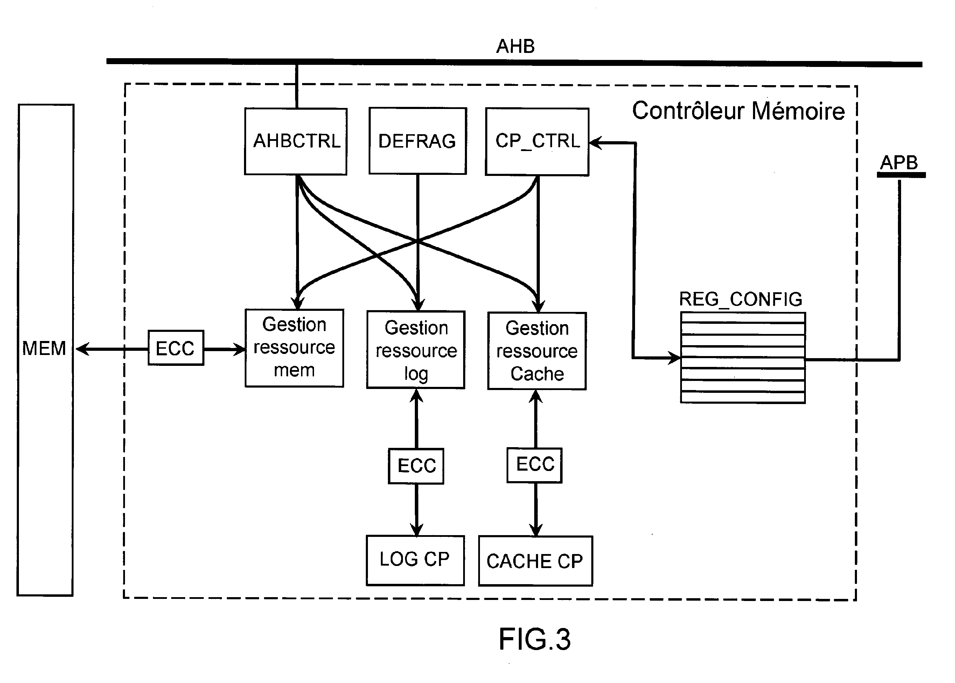

La figure 3 illustre par un diagramme l'architecture du contrôleur mémoire de l'exemple de réalisation de la figure 2, ce contrôleur étant capable de pointage par SDD conformément à l'invention. Le contrôleur mémoire du présent exemple de réalisation comporte notamment un module de gestion de la mémoire MEM, un module de gestion d'un composant Log CP et un module de gestion d'une structure Cache CP. Le contrôleur mémoire comporte également un contrôleur de bus système AHBCTRL (AHB - Advanced High-performance Bus), un module de défragmentation DEFRAG et un module de contrôle de pointage CP_CTRL. Les rôles de ces différents modules seront décrits par la suite. En effet, le contrôleur mémoire du présent exemple de réalisation comporte une première interface AHB avec le bus système. Il comporte également une deuxième interface avec la mémoire MEM contenant les données courantes. Il comporte aussi une troisième interface APB avec le bus périphérique (Advanced Peripheral Bus) pour la configuration et le contrôle du contrôleur mémoire. C'est notamment via cette interface APB qu'est implémenté le protocole de pointage avec le composant CP Maître. Afin de réaliser du pointage par SDD, le présent exemple de réalisation de contrôleur mémoire est notamment capable des opérations suivantes :
o Lecture d'un mot dans la mémoire MEM;
o Écriture d'un mot dans la mémoire MEM;
o Création d'un pointage sur une SDD;
o Suppression d'un pointage sur une SDD, cette action étant faite lorsque ledit pointage peut être considéré comme obsolète;
o Suppression d'un ou de plusieurs pointages simultanément, en faisant évoluer la valeur plancher des pointages d'une SDD donnée, également lorsque les pointages concernés peuvent être considérés comme obsolètes ;
o Recouvrement d'un pointage d'une SDD.

Le présent exemple de réalisation de contrôleur mémoire comporte également le composant Log CP (CP - CheckPoint), qui stocke l'information nécessaire pour restaurer la mémoire MEM telle qu'elle était au moment de n'importe quel pointage pris sur n'importe quelle SDD, excepté les pointages qui auront été déclarés obsolètes. Les pointages obsolètes ont en effet vocation à être supprimés du composant Log CP.

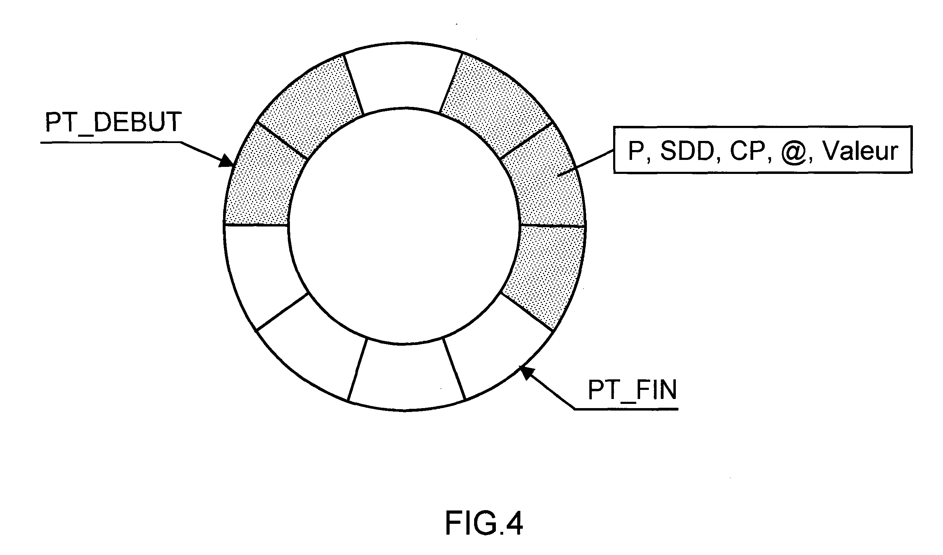

La figure 4 illustre schématiquement le composant Log CP du présent exemple de réalisation. Il comporte notamment une mémoire constituée de plusieurs champs par ligne gérée comme un tampon circulaire à l'aide de deux registres PT_DEBUT et PT_FIN, qui sont des pointeurs respectivement vers le début et vers la fin de la zone de données effective. La taille du tampon circulaire est un paramètre générique du composant Log CP et peut-être adaptée pour dimensionner correctement le système de pointage. Un champ P détermine la présence d'une donnée dans la ligne considérée, la valeur 0 indiquant l'absence et la valeur 1 indiquant la présence d'une donnée. Un champ SDD indique l'identifiant de la SDD. Un champ CP stocke l'identifiant du pointage sur la SDD indiquée par le champ précédent. Un champ @ stocke l'adresse du mot. Un champ Valeur stocke la valeur telle qu'elle était à l'adresse @ à l'instant où le pointage à été pris, sur la SDD correspondante.

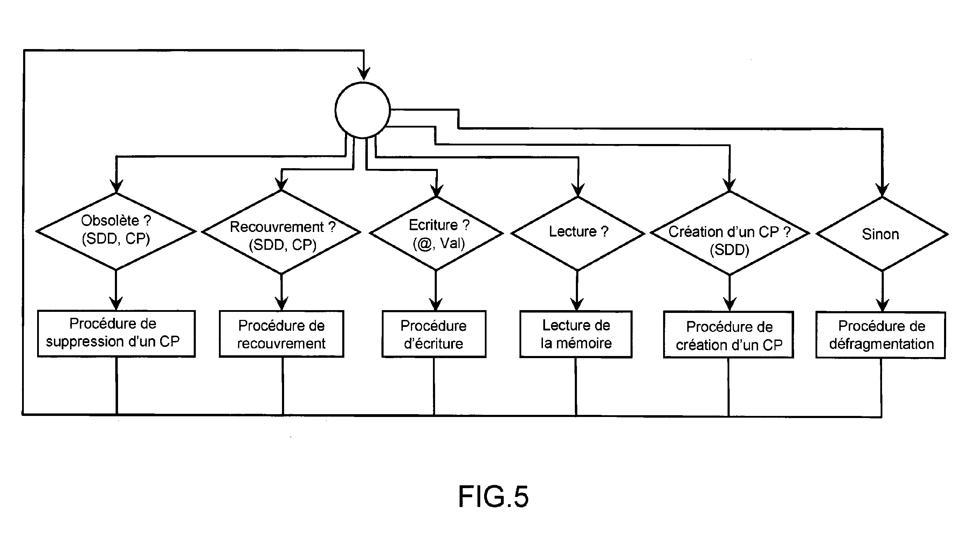

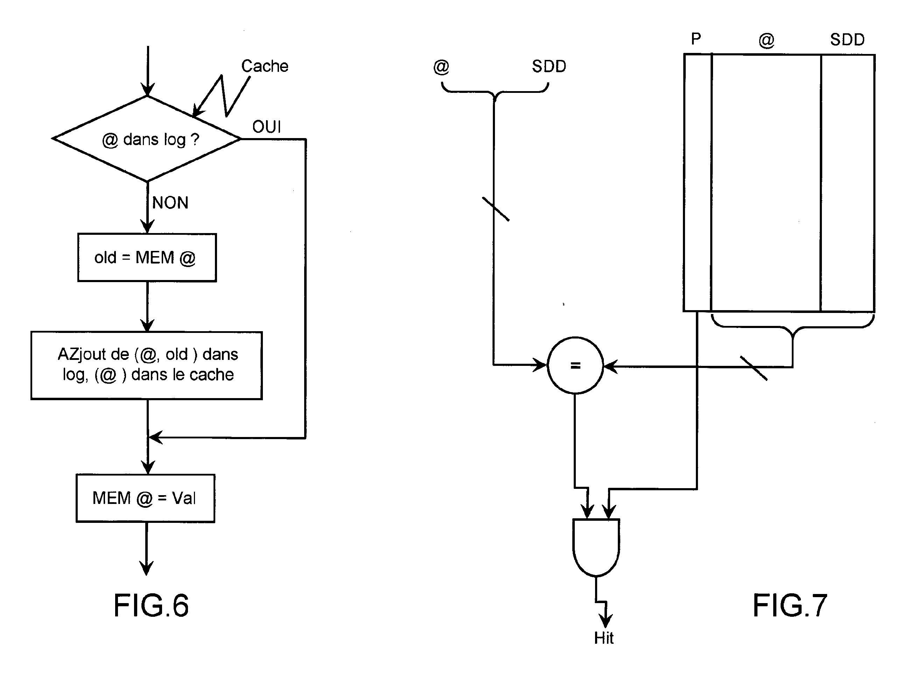

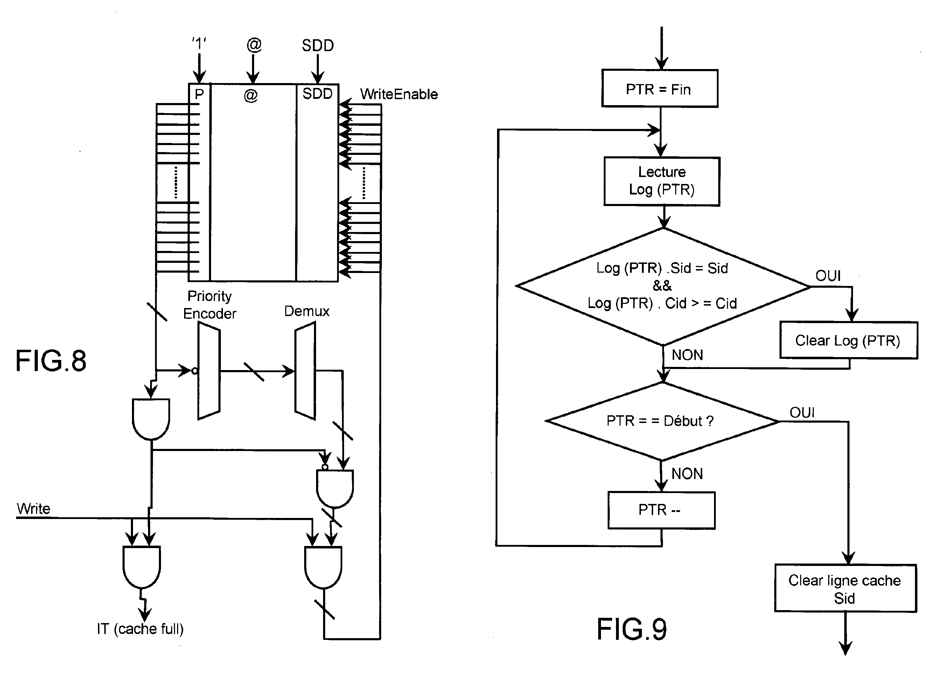

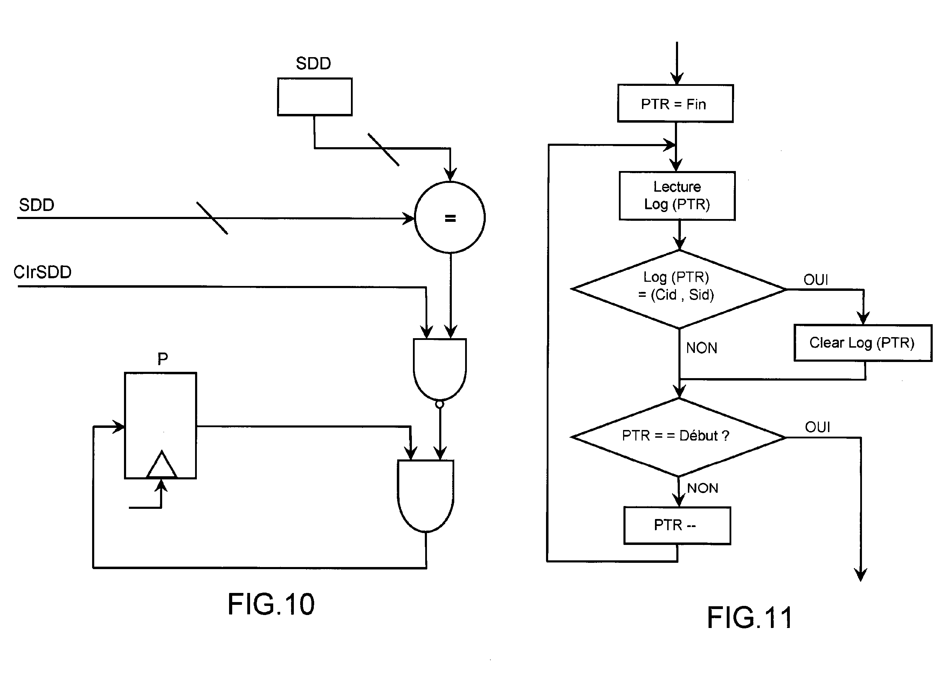

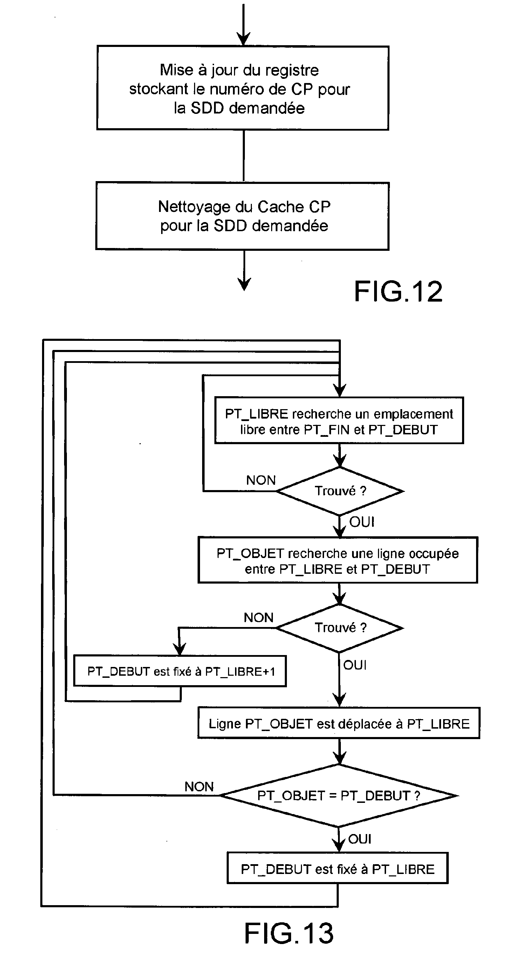

La figure 5 illustre un exemple de machine d'états globale du contrôleur mémoire, notamment la procédure d'écriture qui sera détaillée aux figures 6, 7 et 8, la procédure de recouvrement qui sera détaillée aux figures 9 et 10, la procédure de suppression d'un pointage obsolescent qui sera détaillée à la figure 11, la procédure de création d'un pointage qui sera détaillée à la figure 12, la procédure de maintenance qui sera détaillée à la figure 13 et enfin la procédure de lecture.

### Contrôle de la mémoire : écriture

La figure 6 illustre par un diagramme une opération d'écriture dans la mémoire principale MEM, une telle opération pouvant être réalisée directement ou nécessiter une sauvegarde préalable dans le tampon circulaire du composant Log CP, ce qui génère une latence supplémentaire. En effet, seule la première écriture à une adresse donnée, sur un pointage donné d'une SDD donnée est enregistrée. Les écritures suivantes ne sont ensuite plus enregistrées jusqu'à la création d'un nouveau pointage sur la SDD concernée. Les nouvelles écritures sont stockées à l'emplacement pointé par PT_FIN, ce pointeur étant incrémenté à la fin de l'opération. Il faut remarquer que la zone comprise entre PT_DEBUT et PT_FIN est maintenue ordonnée par SDD. Cette propriété est toujours vraie, même lors des opérations de défragmentation qui sont présentées dans la suite de la présente demande. Si le tampon circulaire est plein, c'est-à-dire si PT_FIN est égal à PT_DEBUT, alors l'écriture dans le tampon est bloquée, tout comme l'opération d'écriture vers la mémoire MEM. Un indicateur est alors positionné à destination du composant CP Maître. La phase initiale de cette écriture est particulièrement sensible, puisqu'il faut déterminer la présence d'une écriture préalable équivalente à l'intérieur du tampon. Une façon naïve de faire cette vérification serait de parcourir en sens inverse le tampon à partir de PT_FIN jusqu'à rencontrer des lignes avec le champ P égal à 1, le champ SDD contenant l'identifiant de la SDD correspondante et le champ CP contenant l'identifiant du pointage antérieur. La recherche s'arrêterait là du fait que le tampon est ordonné. Mais ce n'est pas l'approche utilisée dans le présent exemple de réalisation, car le pire cas de la latence d'écriture serait alors extrêmement élevé. De manière préférentielle, pour déterminer la présence d'une écriture préalable équivalente à l'intérieur du tampon dans le présent exemple de réalisation, la structure dédiée Cache CP est utilisée, comme illustré par la figure 3. Cette structure Cache CP est constituée d'une partie mémoire et d'une partie combinatoire.

La figure 7 illustre par un schéma la partie combinatoire de la structure Cache CP qui implémente la logique permettant de déterminer la présence d'une écriture préalable équivalente à l'intérieur du tampon circulaire du composant Log CP. La partie mémoire du composant Cache CP, qui sera simplement appelée "cache" par la suite, est constituée d'un certain nombre de lignes, ce nombre devant être dimensionné correctement. Si ce nombre de lignes est trop faible, alors le cache est souvent plein et il faut souvent créer des pointages inutilement. Ceci affecte les performances du système à plusieurs niveaux. A l'inverse, si le nombre de lignes est trop élevé, alors le coût en surface est problématique, tant sur les éléments de mémorisation que sur la logique combinatoire. Chacune des lignes se subdivise en plusieurs champs. Un champ P renseigne la présence d'une ligne d'information, la valeur 0 indiquant l'absence et la valeur 1 indiquant la présence. Un champ @ stocke une adresse déjà accédée depuis la dernière création de pointage sur la SDD considérée. Un champ SDD stocke l'identifiant de la SDD considérée. La partie combinatoire permet de faire des actions en un cycle sur l'interprétation du contenu de la partie mémoire, ainsi que sur sa mise à jour. Ainsi, si la sortie Hit du composant Cache CP vaut 1, alors une écriture équivalente a déjà été faite à cette adresse, sur ce pointage et sur cette SDD. Si la sortie Hit du composant Cache CP vaut 0, alors c'est la première écriture. Le cas échéant, le tampon du composant Log CP est complété comme décrit précédemment et cette opération est associée parallèlement à une opération d'écriture dans le cache.

La figure 8 illustre par un schéma comment il est parallèlement écrit dans le tampon du composant Log CP et dans le cache du composant Cache CP. La logique décrite par la figure 8 assure d'ajouter les champs @ et SDD de l'opération d'écriture dans la première ligne libre du cache, c'est-à-dire telle que P=0, tout en positionnant la valeur de P à 1. Si le cache est plein, alors un indicateur est positionné à destination du CP Maître.

### Contrôle de la mémoire : recouvrement

La figure 9 illustre schématiquement le contrôle de l'opération de recouvrement. Comme déjà indiqué précédemment, le buffer circulaire est maintenu ordonné par SDD. Lorsqu'un recouvrement d'un pointage d'une SDD est demandé, le buffer circulaire du composant Log CP est parcouru en sens inverse, c'est-à-dire depuis le pointeur PT_FIN jusqu'au pointeur PT_DEBUT. Pour chaque ligne, si le champ P vaut 1, si le champ SDD contient l'identifiant de la SDD correspondante et si le champ CP contient un identifiant supérieur ou égal à l'identifiant du pointage à restituer, alors le champ Valeur de la ligne est copié à l'adresse indiquée par le champ @ et le champ P est remis à 0.

La figure 10 illustre schématiquement l'opération de nettoyage de SDD dont est capable le composant Cache CP. Pour cela, le composant Cache CP utilise de la logique spécifique, qui permet en un cycle d'écrire 0 dans le champ P de toutes les lignes du cache dont la valeur du champ SDD correspond à l'action de recouvrement. Ceci désactive les lignes qui pourront être réutilisées dans le futur pour mémoriser d'autres actions d'écriture. De plus, le pointage courant de la SDD qui a été recouvrée est configuré au pointage recouvré.

Comme déjà explicité précédemment, le numéro de pointage courant d'une SDD est un nombre entier qui croît au cours du temps pendant le fonctionnement du système. Cependant, un compteur matériel finit forcément par arriver à saturation, du fait du nombre limité de bits pour son codage. Pour pallier à ce problème, l'invention propose d'introduire le concept de valeur plancher dans le système. Lorsqu'un recouvrement a lieu, l'ancienneté relative du pointage analysé doit être comparée à l'ancienneté du pointage donné en paramètre. Pour chaque SDD, une valeur plancher nommée Val_plancher est maintenue, qui permet de comparer des pointages même en cas de saturation. Ainsi, au lieu d'effectuer un test de comparaison direct sur les valeurs, comme d'évaluer la valeur logique de (CPᵢ<CPₚₐᵣₐₘ), un test de comparaison indirect est effectué en évaluant la valeur logique de ((CPᵢ- Val_plancher) mod CPₘₐₓ < (CPₚₐᵣₐₘ- Val_plancher) mod CPₘₐₓ).

### Contrôle de la mémoire : suppression d'un pointage

La figure 11 illustre schématiquement le contrôle de l'opération d'obsolescence. Lorsqu'un pointage d'une SDD est déclaré obsolète, les éléments stockés contenant le numéro de pointage correspondant sur la SDD correspondante sont supprimés du buffer circulaire en écrivant la valeur 0 dans le champ P. Une première possibilité est de rendre obsolète un pointage particulier. Une deuxième possibilité est de rendre obsolète tous les pointages plus anciens qu'un pointage passé en paramètre.

Pour chaque SDD, la valeur plancher est mise à jour lors de l'opération d'obsolescence de tous les pointages plus anciens que le pointage passé en paramètre. La valeur plancher est alors redéfinie et prend la valeur du paramètre fourni. Cette technique permet au système de fonctionner sur un temps non borné.

### Contrôle de la mémoire : création d'un pointage

La figure 12 illustre schématiquement le contrôle de l'opération de création d'un nouveau pointage sur une SDD. Le registre indiquant le pointage courant pour la SDD identifiée est mis à jour par incrémentation. De plus, l'opération de nettoyage de SDD est activée sur la SDD correspondante, car les prochaines écritures dans cette SDD devront être considérées comme de nouvelles écritures depuis le dernier pointage.

### Contrôle de la mémoire : défragmentation

La figure 13 illustre schématiquement le contrôle de l'opération de défragmentation du tampon circulaire du composant Log CP. En effet, lorsque des opérations de suppression de pointage ont lieu, du fait de l'obsolescence ou de recouvrements, des lignes vides apparaissent entre PT_DEBUT et PT_FIN, c'est-à-dire des lignes telles que P=0. Ces lignes ne sont pas utilisables et constituent de l'espace perdu. Pour éviter cela, le contrôleur doit réaliser quand cela est possible une défragmentation du tampon circulaire du composant Log CP. Le contrôleur gère deux pointeurs additionnels sur le tampon circulaire : PT_LIBRE et PT_OBJET.
L'algorithme s'initialise en positionnant PT_LIBRE sur la première ligne vide en partant de PT_FIN. L'algorithme est ensuite une boucle de recherche où à chaque pas de boucle, la première ligne occupée en partant de PT_LIBRE est déplacée sur celle-ci, et le pointeur PT_LIBRE progresse jusqu'à trouver l'emplacement libre suivant. Le pointeur PT_FIN du début du tampon est mis à jour lorsque les lignes entre PT_LIBRE et PT_DEBUT sont libres.

### Contrôle de la mémoire : lecture

L'opération de lecture consiste tout simplement à effectuer la lecture dans la mémoire principale MEM. La capacité de pointage selon l'invention n'affecte pas les performances en ce qui concerne la lecture.

Un avantage supplémentaire de la présente invention est d'être compatible avec des détecteurs de fautes ayant des latences de détection élevées, placés hors du chemin critique, ce qui autorise des performances élevées.

## Revendications

1. Procédé de fiabilisation d'un système comportant une pluralité de processeurs (P1, P2) et une mémoire (MEM), le procédé comportant :
- une étape de regroupement des processus (1, 2, 3) en une pluralité de groupes (10, 20), chaque groupe étant une sphère de dépendance de données (20) regroupant des processus (2, 3) pouvant accéder à des zones (BuC, CuD) de la mémoire (MEM) telles que :
o l'union de toutes lesdites zones (BuCuD) est connexe logiquement, et
o toute zone parmi lesdites zones est d'intersection non-vide avec l'union de toutes les autres zones parmi lesdites zones ;
- une étape de sauvegarde, de façon individuelle pour chaque groupe (20) de processus (2, 3), des données stockées dans la mémoire (MEM) utilisables par au moins un des processus (2, 3) appartenant audit groupe ;
de manière à restaurer un état global sans erreur du système suite à une erreur survenant dans un processeur (P1, P2) exécutant l'un des processus (2, 3) appartenant audit groupe (20), sans avoir à restaurer la globalité de la mémoire (MEM),
le procédé étant **caractérisé en ce qu'**il comporte une étape de confinement des accès à la mémoire (MEM) par sphère de dépendance de données, cette étape de confinement incluant :
- une étape de gestion de droits d'accès aux zones de la mémoire (MEM) pour chaque processus (2, 3), de manière à empêcher la propagation d'une erreur logique survenant dans le processeur (P1, P2) exécutant ledit processus ;
- une étape de gestion d'indicateurs d'appartenance des zones (A, B, C, D) de la mémoire (MEM) à chaque sphère de dépendance de données (20).

2. Dispositif de fiabilisation d'un système comportant une pluralité de processeurs (P1, P2) et une mémoire (MEM), le dispositif comportant :
- des moyens pour regrouper les processus (1, 2, 3) en une pluralité de groupes (10, 20), lesdits moyens regroupant les processus par sphères de dépendance de données, chaque sphère de dépendance de données (20) contenant des processus (2, 3) pouvant accéder à des zones (BuC, CuD) de la mémoire (MEM) telles que :
o l'union de toutes lesdites zones (BuCuD) est connexe logiquement, et
o toute zone parmi lesdites zones est d'intersection non-vide avec l'union de toutes les autres zones parmi lesdites zones ;
- des moyens pour sauvegarder individuellement pour chaque groupe (20) de processus (2, 3) les données stockées dans la mémoire (MEM) utilisables par au moins un des processus (2, 3) appartenant audit groupe ;
de manière à restaurer un état global sans erreur du système suite à une erreur survenant dans un des processeurs (P1, P2) exécutant l'un des processus (2, 3) appartenant audit groupe (20), sans avoir à restaurer la globalité de la mémoire (MEM),
le dispositif étant **caractérisé en ce qu'**il comporte des moyens pour confiner les accès à la mémoire (MEM) par sphère de dépendance de données, ces moyens pour confiner incluant :
- des moyens pour gérer des droits d'accès aux zones de la mémoire (MEM) pour chaque processus (2, 3), de manière à empêcher la propagation d'une erreur logique survenant dans le processeur (P1, P2) exécutant ledit processus ;
- des moyens pour gérer des indicateurs d'appartenance des zones (A, B, C, D) de la mémoire (MEM) à chaque sphère de dépendance de données (20).

3. Dispositif selon la revendication 2, **caractérisé en ce que**, pour chaque sphère de dépendance de données (20), les données sauvegardées incluent :
- les données stockées dans l'union connexe des zones (BuC, CuD) de la mémoire (MEM) pouvant être accédées par l'un des processus (2, 3) appartenant à ladite sphère (20), et/ou
- les données stockées dans les registres des processeurs (P1, P2) exécutant l'un des processus (2, 3) appartenant à ladite sphère (20), et/ou
- les données stockées dans les étages de pipeline des processeurs (P1, P2) exécutant l'un des processus (2, 3) appartenant à ladite sphère (20), et/ou
- les données stockées dans les unités (MMU) de gestion de la mémoire (MEM) ou dans les unités (MPU) de protection de la mémoire (MEM) incluses dans les processeurs (P1, P2) exécutant l'un des processus (2, 3) appartenant à ladite sphère (20), et/ou
- les données stockées dans les mémoires caches des processeurs (P1, P2) exécutant l'un des processus (2, 3) appartenant à ladite sphère (20).

4. Dispositif selon l'une des revendications 2 et 3, **caractérisé en ce que** les moyens pour regrouper les processus en sphères de dépendance de données sont implémentés sous la forme de services fournis par le système d'exploitation du système, ces services fournissant les différentes sphères de dépendance de données correspondant à tous les processus couramment exécutés.

5. Dispositif selon la revendication 4, **caractérisé en ce que** les moyens pour sauvegarder incluent des moyens (CP Maître) pour coordonner les sauvegardes des différentes sphères de dépendance de données (10, 20) correspondant à tous les processus (1, 2, 3) couramment exécutés, ces moyens pour coordonner incluant:
- des moyens pour déclencher une sauvegarde des données pour une sphère de dépendance de données (20) correspondant à des processus (2. 3) couramment exécutés ;
- des moyens pour déclencher, suite à l'erreur logique survenue dans un des processeurs (P1, P2) exécutant l'un des processus (2, 3) appartenant à ladite sphère (20), la restauration des données sauvegardées pour ladite sphère de dépendance de données (20) exclusivement.

6. Dispositif selon la revendication 2, **caractérisé en ce que** les moyens pour confiner incluent une unité de gestion de la mémoire (MMU) ou une unité de protection de la mémoire (MPU) associée à chacun des processeurs (P1, P2) du système, ladite unité interdisant au processeur auquel elle est associée l'accès à la mémoire (MEM) en dehors de la zone (BuC, CuD) allouée au processus (2, 3) en cours d'exécution par ledit processeur.

7. Dispositif selon la revendication 6, **caractérisé en ce que** l'unité de gestion de la mémoire (MMU) ou l'unité de protection de la mémoire (MPU) inclut des moyens de gestion de droits d'accès à la mémoire, les sphères de dépendance de données courantes dépendant de ces droits d'accès.

## Patentansprüche

1. Verfahren zur Verbesserung der Zuverlässigkeit eines Systems, das eine Vielzahl von Prozessoren (P1, P2) und einen Speicher (MEM) aufweist, wobei das Verfahren aufweist:
- einen Gruppierungsschritt der Prozesse (1, 2, 3) in einer Vielzahl von Gruppen (10, 20), wobei jede Gruppe eine Datenabhängigkeitssphäre (20) ist, die Prozesse (2, 3) gruppiert, die auf Zonen (BuC, CuD) des Speichers (MEM) zugreifen können wie:
∘ die Vereinigung aller Zonen (BuCuD) ist logisch verbunden, und
∘ jede Zone der Zonen ist eine nicht leere Schnittmenge mit der Vereinigung aller anderen Zonen der Zonen,
- einen für jede Gruppe (20) von Prozessen (2, 3) individuellen Speicherschritt der im Speicher (MEM) gespeicherten Daten, die von mindestens einem der der zu der Gruppe gehörenden Prozesse (2, 3) verwendbar sind,
um einen fehlerfreien globalen Zustand des Systems nach einem Fehler in einem Prozessor (P1, P2), der einen der der zu der Gruppe (20) gehörenden Prozesse (2, 3), ausführt, wiederherzustellen, ohne die Globalität des Speicher (MEM) wiederherstellen zu müssen,
wobei das Verfahren **dadurch gekennzeichnet ist, dass** es einen Sicherungsschritt der Zugriffe auf den Speicher (MEM) je Datenabhängigkeitssphäre aufweist, wobei dieser Sicherungsschritt einschließt:
- einen Verwaltungsschritt der Zugriffsrechte auf Zonen des Speichers (MEM) für jeden Prozess (2, 3), um die Weiterverbreitung eines logischen Fehlers, der in dem Prozessor (P1, P2) auftritt, der den Prozess ausführt, zu verhindern,
- einen Verwaltungsschritt von Zugehörigkeitsindikatoren der Zonen (A, B, C, D) des Speichers (MEM) zu jeder Datenabhängigkeitssphäre (20).

2. Vorrichtung zur Verbesserung der Zuverlässigkeit eines Systems, das eine Vielzahl von Prozessoren (P1, P2) und einen Speicher (MEM) aufweist, wobei die Vorrichtung aufweist:
- Gruppierungsmittel der Prozesse (1, 2, 3) in einer Vielzahl von Gruppen (10, 20), wobei die Mittel die Prozesse nach Datenabhängigkeitssphären gruppieren, wobei jede Datenabhängigkeitssphäre (20) Prozesse (2, 3) enthält, die auf Zonen (BuC, CuD) des Speichers (MEM) zugreifen können wie:
∘ die Vereinigung aller Zonen (BuCuD) ist logisch verbunden, und
∘ jede Zone der Zonen ist eine nicht leere Schnittmenge mit der Vereinigung aller anderen Zonen der Zonen,
- Mittel für das individuelle Speichern für jede Gruppe (20) von Prozessen (2, 3) der im Speicher (MEM) gespeicherten Daten, die von mindestens einem der zu der Gruppe gehörenden Prozesse (2, 3) verwendbar sind,
um einen fehlerfreien globalen Zustand des Systems nach einem Fehler in einem Prozessor (P1, P2), der einen der der zu der Gruppe (20) gehörenden Prozesse (2, 3), ausführt, wiederherzustellen, ohne die Globalität des Speicher (MEM) wiederherstellen zu müssen,
wobei die Vorrichtung **dadurch gekennzeichnet ist, dass** es Sicherungsmittel der Zugriffe auf den Speicher (MEM) je Datenabhängigkeitssphäre aufweist, wobei diese Sicherungsmittel einschließen:
- Verwaltungsmittel der Zugriffsrechte auf Zonen des Speichers (MEM) für jeden Prozess (2, 3), um die Weiterverbreitung eines logischen Fehlers, der in dem den Prozess ausführenden Prozessor (P1, P2) auftritt, zu verhindern,
- Verwaltungsmittel der Zugehörigkeitsindikatoren der Zonen (A, B, C, D) des Speichers (MEM) zu jeder Datenabhängigkeitssphäre (20).

3. Vorrichtung nach Anspruch 2, **dadurch gekennzeichnet, dass** die gespeicherten Daten für jede Datenabhängigkeitssphäre (20) einschließen:
- die in der verbundenen Vereinigung der Zonen (BuC, CuD) des Speichers (MEM) gespeicherten Daten, auf die einer der zu der Sphäre (20) gehörenden Prozesse (2, 3) zugreifen kann, und/oder
- die in den Registern der Prozessoren (P1, P2), die einen der zu der Sphäre (20) gehörenden Prozesse (2, 3) ausführen, gespeicherten Daten, und/oder
- die in den Pipelineetagen der Prozessoren (P1, P2), die einen der zu der Sphäre (20) gehörenden Prozesse (2, 3) ausführen, gespeicherten Daten, und/oder
- die in den Verwaltungseinheiten (MMU) des Speichers (MEM) oder in den Schutzeinheiten (MPU) des Speichers (MEM), die in den Prozessoren (P1, P2) inbegriffen sind, die einen der zu der Sphäre (20) gehörenden Prozesse (2, 3) ausführen, gespeicherten Daten und/oder
- die in den Cache-Speichern der Prozessoren (P1, P2), die einen der zu der Sphäre (20) gehörenden Prozesse (2, 3) ausführen, gespeicherten Daten.

4. Vorrichtung nach einem der Ansprüche 2 und 3, **dadurch gekennzeichnet, dass** die Gruppierungsmittel der Prozesse in Datenabhängigkeitssphären in Form von Diensten implementiert sind, die vom Betriebssystem des Systems bereitgestellt werden, wobei diese Dienste die verschiedenen Datenabhängigkeitssphären bereitstellen, die allen häufig ausgeführten Prozessen entsprechen.

5. Vorrichtung nach Anspruch 4, **dadurch gekennzeichnet, dass** die Speichermittel Koordinationsmittel (CP Master) der Speicherung der verschiedenen Datenabhängigkeitssphären (10, 20), die allen häufig ausgeführten Prozessen (1, 2, 3) entsprechen, einschließen, wobei diese Koordinationsmittel einschließen:
- Mittel, um eine Datenspeicherung für eine Datenabhängigkeitssphäre (20) auszulösen, die häufig ausgeführten Prozessen (2, 3) entspricht,
- Mittel, um nach einem logischen Fehler in einem der Prozessoren (P1, P2), der einen der zu der Sphäre (20) gehörenden Prozesse (2, 3) ausführt, die Wiederherstellung der gespeicherten Daten nur für die Datenabhängigkeitssphäre (20) auszulösen.

6. Vorrichtung nach Anspruch 2, **dadurch gekennzeichnet, dass** die Sicherungsmittel eine Speicherverwaltungseinheit (MMU) oder eine Speicherschutzeinheit (MPU), die jedem der Prozessoren (P1, P2) des Systems zugeordnet ist, einschließen, wobei die Einheit dem Prozessor, dem sie zugeordnet ist, den Zugriff auf den Speicher (MEM) außerhalb der Zone (BuC, CuD) untersagt, die dem Prozess (2, 3) während der Ausführung durch den Prozessor zugewiesen ist.

7. Vorrichtung nach Anspruch 6, **dadurch gekennzeichnet, dass** die Speicherverwaltungseinheit (MMU) oder die Speicherschutzeinheit (MPU) Speicherzugriffsrechteverwaltungsmittel einschließt, wobei die üblichen Datenabhängigkeitssphären von diesen Zugriffsrechten abhängen.

## Claims

1. A method for enhancing the reliability of a system comprising a plurality of processors (P1, P2) and a memory (MEM), said method comprising:
- a step of grouping processes (1, 2, 3) into a plurality of groups (10, 20), each group being a data dependency sphere (20) grouping processes (2, 3) able to access zones (BuC, CuD) of said memory (MEM) such that:
∘ the union of all of said zones (BuCuD) is logically connected, and
∘ each zone among said zones is a non-empty intersection with the union of all of the other zones among said zones;
- a step of saving, individually for each group (20) of processes (2, 3), the data stored in said memory (MEM) that can be used by at least one of the processes (2, 3) belonging to said group,
so as to restore a global error-free state for said system following an error occurring in a processor (P1, P2) executing one of said processes (2, 3) belonging to said group (20), without having to restore the entire memory (MEM),
said method being **characterised in that** it comprises a step of confining access to said memory (MEM) by means of a data dependency sphere, said confinement step including:
- a step of managing access rights to the zones of said memory (MEM) for each process (2, 3), so as to prevent the propagation of a logic error occurring in the processor (P1, P2) executing said process;
- a step of managing indicators of affiliation of zones (A, B, C, D) of said memory (MEM) to each data dependency sphere (20).

2. A device for enhancing the reliability of a system comprising a plurality of processors (P1, P2) and a memory (MEM), said device comprising:
- means for grouping said processes (1, 2, 3) into a plurality of groups (10, 20), said means grouping the processes by data dependency spheres, with each data dependency sphere (20) containing processes (2, 3) able to access zones (BuC, CuD) of said memory (MEM) such that:
∘ the union of all of said zones (BuCuD) is logically connected, and
∘ each zone among said zones is a non-empty intersection with the union of all of the other zones among said zones;
- means for saving, individually for each group (20) of processes (2, 3), the data stored in said memory (MEM) that can be used by at least one of said processes (2, 3) belonging to said group,
so as to restore a global error-free state for said system following an error occurring in one of said processors (P1, P2) executing one of the processes (2, 3) belonging to said group (20), without having to restore the entire memory (MEM),
said device being **characterised in that** it comprises means for confining access to said memory (MEM) by means of a data dependency sphere, said confinement means comprising:
- means for managing access rights to the zones of said memory (MEM) for each process (2, 3), so as to prevent the propagation of a logic error occurring in the processor (P1, P2) executing said process;
- means for managing indicators of affiliation of zones (A, B, C, D) of said memory (MEM) to each data dependency sphere (20).

3. The device according to claim 2, **characterised in that**, for each data dependency sphere (20), the saved data includes:
- the data stored in the connected union of said zones (BuC, CuD) of said memory (MEM) that can be accessed by one of said processes (2, 3) belonging to said sphere (20), and/or
- the data stored in the registers of said processors (P1, P2) executing one of the processes (2, 3) belonging to said sphere (20), and/or
- the data stored in the pipeline stages of said processors (P1, P2) executing one of the processes (2, 3) belonging to said sphere (20), and/or
- the data stored in the management units (MMU) of said memory (MEM) or in the units (MPU) for protecting said memory (MEM) that are included in said processors (P1, P2) executing one of the processes (2, 3) belonging to said sphere (20), and/or
- the data stored in the cache memories of said processors (P1, P2) executing one of the processes (2, 3) belonging to said sphere (20).

4. The device according to claim 2 or 3, **characterised in that** said means for grouping the processes into data dependency spheres are implemented in the form of services provided by the operating system of the system, said services providing the various data dependency spheres corresponding to all of the currently executed processes.

5. The device according to claim 4, **characterised in that** said saving means include means (CP Master) for coordinating the saving of the various data dependency spheres (10, 20) corresponding to all of the processes (1, 2, 3) that are currently executed, said coordinating means comprising:
- means for starting a data save for a data dependency sphere (20) corresponding to currently executed processes (2, 3);
- means for starting, following the logic error that has occurred in one of said processors (P1, P2) executing one of said processes (2, 3) belonging to said sphere (20), the restoration of data saved for said data dependency sphere (20) exclusively.

6. The device according to claim 2, **characterised in that** said confinement means comprise a memory management unit (MMU) or a memory protection unit (MPU) associated with each of said processors (P1, P2) of said system, said unit prohibiting the processor with which it is associated from accessing said memory (MEM) outside of the zone (BuC, CuD) assigned to the process (2, 3) currently being executed by said processor.

7. The device according to claim 6, **characterised in that** said memory management unit (MMU) or said memory protection unit (MPU) include means for managing access rights to said memory, with the current data dependency spheres depending on these access rights.
